# EUROPEAN PATENT APPLICATION

(11) **EP 4 682 834 A1**
(43) Date of publication of application: **21.01.2026**
(21) Application number: 24770758.1
(22) Date of filing: 08.03.2024
(51) Int. Cl.: G06T 11/80, G06F 40/169

(54) **EDITING PROGRAM AND EDITING METHOD**

(30) Priority: 15.03.2023 JP 2023041206
(71) Applicant: BROTHER KOGYO KABUSHIKI KAISHA, Nagoya-shi, Aichi 467-8561 (JP)
(72) Inventor: UEDA, Yuma, Nagoya-shi, Aichi 467-8562 (JP)
(74) Representative: J A Kemp LLP
(86) International application number: PCT/JP2024/009005
(87) International publication number: WO 2024/190652

(57) **Abstract**

The present invention provides an editing program and method that can prevent reviewers from inadvertently editing an editing area in its initial state when a review was requested. The editing program includes instructions to cause a processor of a computer to execute the following processing. The processor edits, based on an editing instruction instructing to edit an editing area, an editing layer set in the editing area, and displays the editing area that is edited on the display. The processor executes a restriction on the editing of the editing layer, the restriction being based on acquisition of a review instruction instructing to review the editing layer, and edits, based on the editing instruction, a review layer, and displays the editing area that is edited on the display (S41). The review layer is set in the editing area and is different from the editing layer. The processor lifts the restriction on the editing the editing layer based on completion of the review of the editing layer (S59).

## Description

### TECHNICAL FIELD

The present disclosure relates to an editing program and an editing method.

### BACKGROUND ART

A known document is simultaneously opened by different reviewers so that a plurality of reviewers can review it. Each of the reviewers can simultaneously add comments to the document. Comments made by one reviewer on the document are automatically synchronized with other reviewers who are accessing the document simultaneously.

### PRIOR ART LITERATURE

### PATENT LITERATURE

Patent Document 1: Japanese Unexamined Patent Application Publication No. 2011-520172

### SUMMARY

### PROBLEM TO BE SOLVED BY THE INVENTION

With this known method, a reviewer may inadvertently edit the document in its originally requested state. As a result, it becomes difficult to verify the document in the state in which the review was originally requested.

An object of the present invention is to provide an editing program and an editing method that can prevent a reviewer from inadvertently editing an editing area in its initial state when a review was requested.

### MEANS FOR SOLVING THE PROBLEM

An editing program for a computer including a display and a processor, according to a first aspect of the present invention, includes instructions that, when executed by the processor, instruct the computer to perform processes. The processes include editing, based on an editing instruction instructing to edit an editing area, an editing layer set in the editing area, and displaying the editing area that is edited on the display, executing a restriction on the editing of the editing layer, the restriction being based on acquisition of a review instruction instructing to review the editing layer, and editing, based on the editing instruction, a review layer, and displaying the editing area that is edited on the display, the review layer being set in the editing area and being different from the editing layer, and lifting the restriction on the editing of the editing layer based on completion of the review of the editing layer. The editing program according to the first aspect allows comments, for example, to be edited in the review layer based on the editing instruction, in a case where the editing instruction is acquired during a review. Thus, the editing program contributes to avoiding the editing layer from being inadvertently edited during a review.

An editing method according to a second aspect of the present invention is executed by an editing system including a computer and a server. The computer includes a display and a processor. The server is configured to connect to the computer. The editing method includes editing, based on an editing instruction instructing to edit an editing area, an editing layer set in the editing area, and displaying the editing area that is edited on the display, executing a restriction on the editing of the editing layer, the restriction being based on acquisition of a review instruction instructing to review the editing layer, and editing, based on the editing instruction, a review layer, and displaying the editing area that is edited on the display, the review layer being set in the editing area and being different from the editing layer, and lifting the restriction on the editing of the editing layer based on completion of the review of the editing layer. The editing method according to the second aspect allows comments, for example, to be edited in the review layer based on the editing instruction, in a case where the editing instruction is acquired during a review. Thus, the editing method contributes to avoiding the review layer from being inadvertently edited during a review.

### BRIEF DESCRIPTION OF DRAWINGS

[FIG.1] FIG. 1 is a diagram showing the electrical configuration of an editing system 1.
[FIG.2] FIG. 2 is a flowchart of main processing executed by a terminal device 3.
[FIG.3] FIG. 3 illustrates a transition of note information according to a specific example.
[FIG.4] FIG. 4 illustrates a home screen 60 and an editing screen 70 according to a specific example.
[FIG.5] FIG. 5 illustrates history information stored in history information storage areas 28 and 39.
[FIG.6] FIG. 6 is a flowchart of review processing executed in the main processing of FIG. 2.
[FIG.7] FIG. 7 illustrates a transition of a review screen 80 according to a specific example.
[FIG.8] FIG. 8 illustrates a transition of note information according to a specific example.
[FIG.9] FIG. 9 illustrates an editing layer LN, a review layer LA, and a review layer LJ set in an editing area 71.
[FIG.10] FIG. 10 illustrates the home screen 60 and a screen 90 according to a specific example.
[FIG.11] FIG. 11 is a flowchart of server processing executed by a server 2.

### DETAILED DESCRIPTION OF THE EXEMPLARY EMBODIMENTS

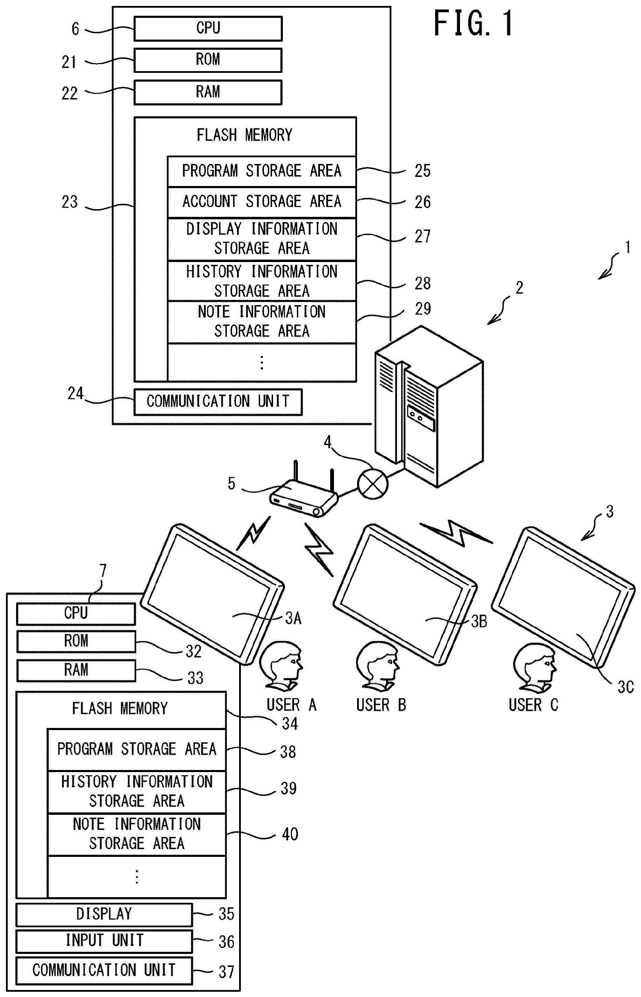

An embodiment of present disclosure will be described with reference to the drawings. As shown in FIG. 1, an editing system 1 includes a server 2 and three terminal devices 3. The server 2 is communicatively connected to an access point 5 via a network line 4. The three terminal devices 3 are each used by different users A, B, and C. Each of the terminal devices 3 is a portable terminal device such as a well-known tablet-type terminal device and a multifunctional mobile phone (so-called smartphone), and can wirelessly connect to the access point 5. Hereinafter, the terminal device 3 used by the user A is also referred to as terminal device 3A; the terminal device 3 used by the user B is also referred to as terminal device 3B; and the terminal device 3 used by the user C is also referred to as terminal device 3C. In the following description, a case will be described where the terminal devices 3A to 3C each have the same configuration in order to simplify the description, but the terminal devices 3A to 3C may each have a different configuration from one another.

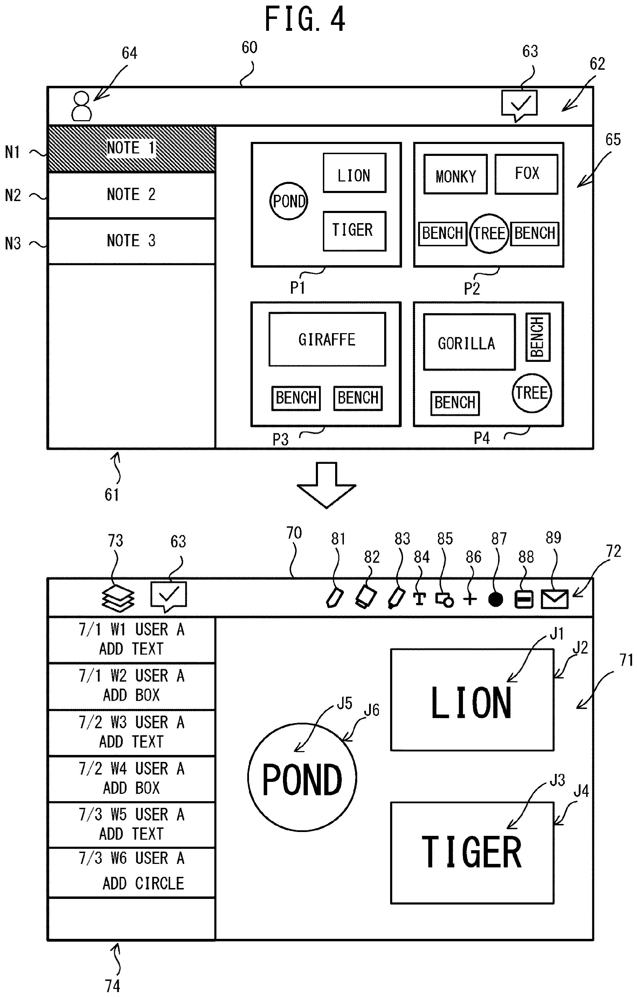

As shown in FIG. 1, the server 2 is includes a CPU 6, a ROM 21, a RAM 22, a flash memory 23, and a communication unit 24. The CPU 6 is configured to control the server 2. The ROM 21 stores information and the like used by the CPU 6 during execution of various programs. The RAM 22 is configured to temporarily store data while the CPU 6 is executing processing. The flash memory 23 is a non-volatile storage device. The flash memory 23 includes a program storage area 25, an account storage area 26, a display information storage area 27, a history information storage area 28, and a note information storage area 29. Various programs executed by the CPU 6 are stored in the program storage area 25. Account information is stored in the account storage area 26. Account information includes user information used to distinguish one user from another user, and a password used in a case where logging into the editing system 1. Display information indicating an object displayed in a latest editing area 71 (refer to FIG. 4) is stored in the display information storage area 27. History information, which will be described later, is stored in history information storage area 28. Note information, which will be described later, is stored in the note information storage area 29. The communication unit 24 is a communication module that allows the server 2 to communicate with each of the terminal devices 3A to 3C via the network line 4 and the access point 5.

The terminal device 3 includes a CPU 7, a ROM 32, a RAM 33, a flash memory 34, a display 35, an input unit 36, and a communication unit 37. The CPU 7 is configured to control the terminal device 3. The ROM 32 stores information and the like used by the CPU 7 during execution of various programs. The RAM 33 is configured to temporarily store data while the CPU 7 is executing processing. The flash memory 34 is a non-volatile storage device. The flash memory 34 includes a program storage area 38, a history information storage area 39, and a note information storage area 40. The program storage area 38 stores various programs executed by the CPU 7, including an editing program that will be described later. History information, which will be described later, is stored in the history information storage area 39. Note information, which will be described later, is stored in the note information storage area 40. The display 35 is a liquid crystal display configured to display various types of information. The input unit 36 is a touchscreen placed on the surface of the display 35, which is configured to detect the contact position of operating objects such as pens and fingers on the display 35 to output detection signals corresponding to the detected contact positions to the CPU 7. The communication unit 37 is a communication module that enables the terminal device 3 to communicate with server 2 via the network line 4 and the access point 5.

As shown in FIG. 1, the editing system 1 allows the plurality of users A to C to use their respective terminal devices 3A to 3C, and communicate via the server 2, either simultaneously or at different times, to edit an object within the common editing area 71, as will be described later with reference to FIG. 4. The user operates the terminal device 3 to launch a shared application. With the launch of the shared application, the editing system 1 is configured to display, on the display 35 of the terminal device 3, a shared screen among the terminal devices 3, as designated by the user.

An overview of the processing executed by the editing system 1 will be described using a case where an editing operation is performed on the terminal device 3A as an example. In a case where the CPU 7 of the terminal device 3A detects object editing through the input unit 36, the CPU 7 of the terminal device 3A updates the screen of the display 35 according to the editing content. The CPU 7 of the terminal device 3A sends history information and note information corresponding to the editing content to the server 2 via the network line 4 and the access point 5, stores the history information in the history information storage area 39 of the terminal device 3A, and stores the note information in the note information storage area 40 of the terminal device 3A. In a case where the CPU 6 of the server 2 receives the history information and the note information from the terminal device 3A, the CPU 6 stores the received history information in the history information storage area 28, stores the note information in the note information storage area 29, and updates the display information storage area 27 according to the history information and note information. The CPU 6, along with the terminal device 3A, sends, via the network line 4 and the access point 5, the display information, the history information, and the note information to other terminal devices 3 that are editing the editing area 71. In a case where the terminal devices 3B and 3C receive the display information, the history information, and the note information, the CPU 7 of the terminal devices 3B and 3C updates the display 35 of the terminal device 3B according to the received information. This allows the display content of the editing area 71 to be shown on the display 35 of the each of the terminal devices 3A, 3B, and 3C, and shared within the editing system 1.

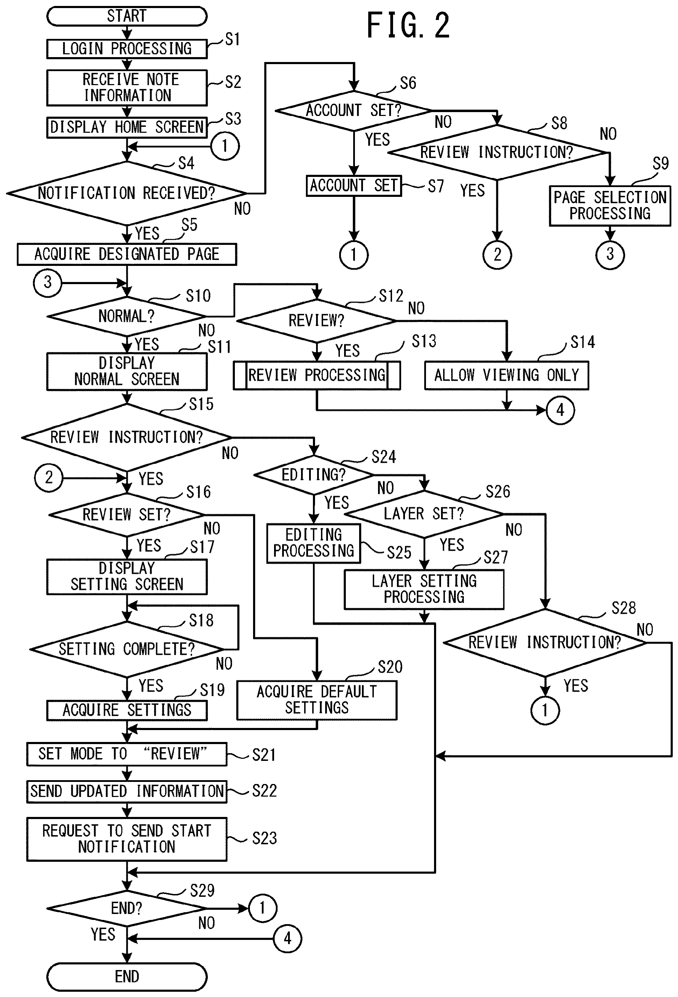

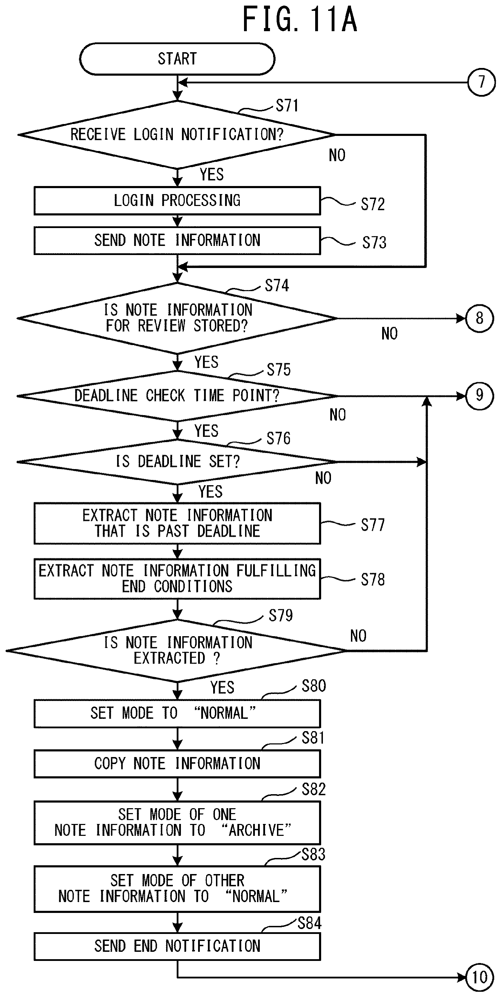

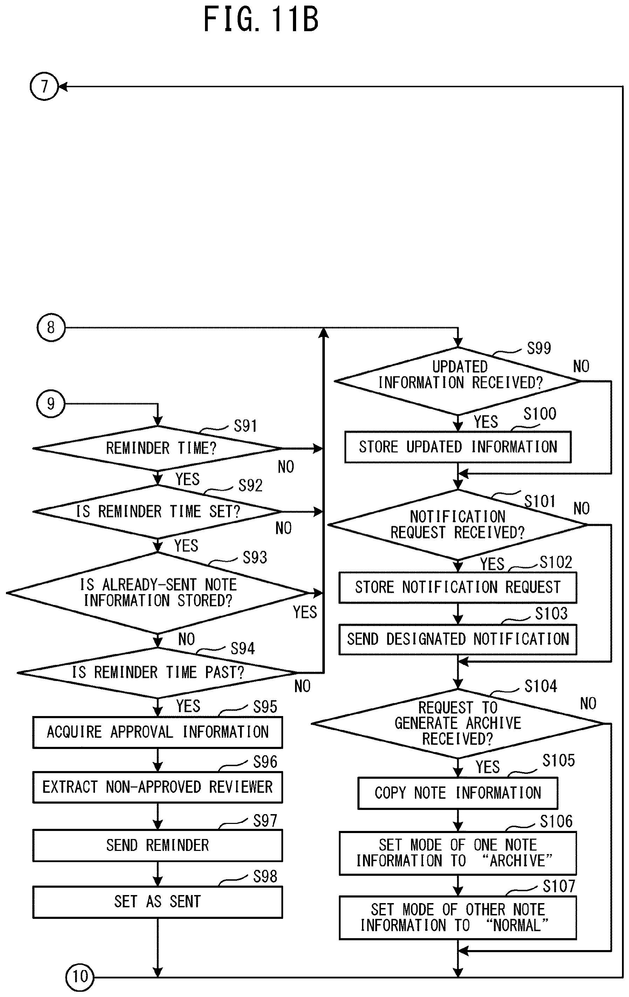

Main processing executed in the each of the terminal devices 3A to 3C will now be described with reference to FIG. 2 to FIG. 10. The main processing of the terminal devices 3A to 3C is executed individually in the each of the terminal device 3. In a case where the CPU 7 detects a login instruction to log into the editing system 1 input by the user via the input unit 36, the CPU 7 reads out the editing program from the program storage area 38 shown in FIG. 1. By executing the read-out editing program, the CPU 7 starts the main processing shown in FIG. 2. As an example, a specific example will be used where the user A edits a zoo layout using the editing system 1, and then requests reviews from the users B and C, each of whom reviews the zoo layout edited by the user A. In the specific example, the editing area 71 is edited or viewed by the users A to C. As will be described later with reference to FIG. 11, in a case where the server 2 receives update information in the main processing sent from terminal device 3, the server 2 updates the display information, the history information, and the note information, and sends the display information, the history information, and the note information to the other terminal devices 3 that are logged in.

As shown in FIG. 2, the CPU 7 of the terminal device 3A executes the login processing to log into the editing system 1 (S1). Specifically, the CPU 7 sends login information, including user information and a password included in the login instructions, to the server 2. The CPU 6 of the server 2 collates the received login information with the account information stored in the account storage area 26.

In a case where the login fails, the CPU 6 of the server 2 sends error information to the terminal device 3 that executed the login processing, and the CPU 7 of the terminal device 3A aborts further processing. In a case where the login succeeds, the CPU 6 continues subsequent processing by sending the note information associated with the terminal device 3A to the terminal device 3A that executed the login processing. In a case where the note information associated with the terminal device 3A is not stored, the CPU 6 of the server 2 executes processing to newly start editing of a note and the editing area 71. The CPU 6 is configured to identify the terminal device 3 that sent the history information and the note information based on the login information, even in a case where a plurality of users are logged into the editing system 1 simultaneously.

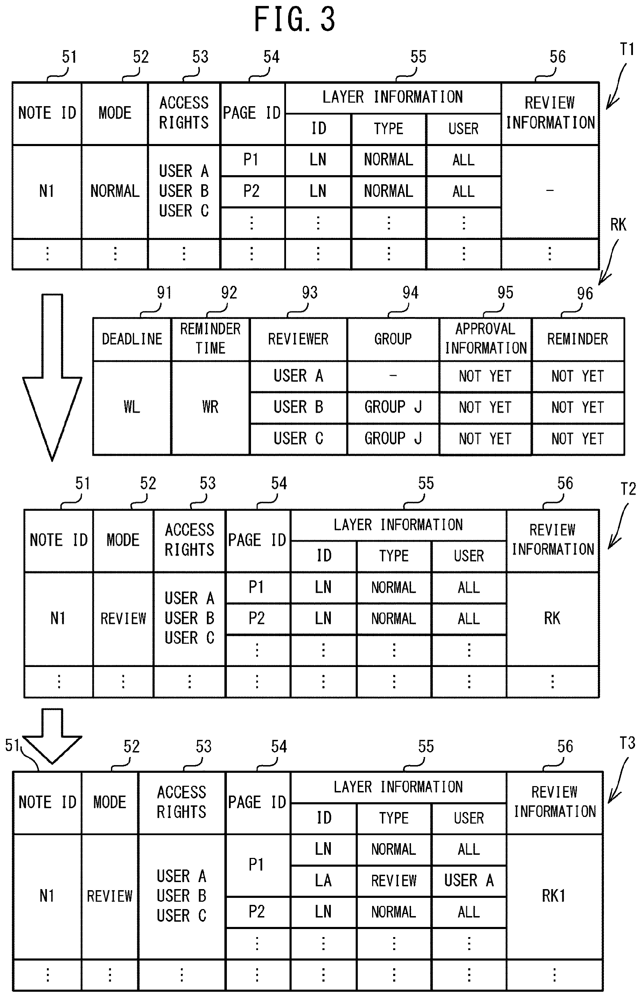

The note is a unit of editing composed of one or more editing areas 71. A single editing area 71 of a note is also referred to as a page. As shown in FIG. 3, a Table T1 stored in the note information storage area 40 includes a note ID 51, a mode 52, access rights 53, a page ID 54, layer information 55, and review information 56. The note ID 51 is the identification information of the note. The mode 52 defines the editing conditions of the editing area included in the note. The modes of the present embodiment include three types: normal, review, and archive. "Normal" indicates that the editing area included in the note is in an editable state. In a case where the mode is "normal", the layer that is set is referred to as the editing layer. "Review" indicates that the editing area is being reviewed, and that at the start of the review, the layer of the editing area included in the note is in an uneditable state. In a case where the mode is "review", the layer that is set is referred to as the review layer. In a case where the mode 52 is being reviewed, editing of the layers included in notes is restricted at the start of the review, however, the CPU 7 can add a review layer to the editing area or edit objects in the added review layer after the review starts. "Archive" indicates that the review of the editing area is completed, and that the editing of each of the editing layer and review layer in the editing area is restricted. In a case where the mode is "archive", editing of the layer is not accepted.

The access rights 53 store identification information of users who can access the editing area included in the note. The page ID 54 indicates identification information for each editing area included in the note. The layer information 55 is information about the layer included in the editing area. The layer information 55 includes an ID of the layer, a type of the layer, and a user of the layer. The ID of the layer is the identification information of the layer. The type of the layer indicates the category of the layer. The type in the present embodiment can be either "normal", indicating an editing layer, or "review", indicating a review layer. The user of the layer is information designating the user who can edit the layer. A user is identified, for example, by a user ID or a group ID. A user on a layer editable by all users who have access rights may be defined as "all". The layer information 55 may include information about the objects placed in the layer. The review information 56 is information assigned in a case where the mode 52 is set to "review". The review information 56 will be described later.

The CPU 7 of the terminal device 3A receives the Table T1 from the server 2 as note information of the terminal device 3A (S2). The CPU 7 of the terminal device 3A stores the received Table T1 in the note information storage area 40 and displays a home screen 60 shown in FIG. 4 on the display 35 based on Table T1 (S3). The home screen 60 includes a display area 61, a button display area 62, and a page selection field 65. The display area 61 displays a list of notes that the terminal device 3A has access rights to, based on the Table T1 received from the server 2. Notes N1 to N3 displayed in the display area 61 of FIG. 4 indicate notes corresponding to the note information whose note ID is indicated by N1 to N3. In the display area 61, the background of the selected note is changed to a different color from the other notes. In FIG. 4, the note N1 is currently selected. The button display area 62 displays buttons for operations on the selected note or the selected page. The button display area 62 of the present embodiment includes a review button 63 for requesting a review, and a setting button 64 for instructing account settings. The page selection field 65 displays thumbnail images of pages included in the selected note and accepts instructions for selecting a page to be edited or viewed from the displayed pages. On the screen 60 of FIG. 4, thumbnails of pages P1 to P4 included in note N1 are displayed.

The CPU 7 of the terminal device 3A determines whether a notification is received from another terminal device 3 (S4). The notification of the present embodiment is one of several types of notifications, including a start notification that notifies the start of a review, and an end notification that notifies the end of a review. In a case where a notification is received (yes at S4), the CPU 7 acquires the page designated by the notification (S5). In a case where a notification is not received (no at S4), the CPU 7 determines whether to set up the account based on whether selection of the setting button 64 is detected (S6). Account settings may include, for example, the setting of access rights for notes, as well as the setting of a note administrator. The administrator in the present embodiment has the authority to edit the editing layer, even in a case where the mode of the note is "review". In a case where selection of the setting button 64 is detected (yes at S6), the CPU 7 executes processing to set up of the account according to the contents input by the user (S7). In a case where an instruction to set an administrator in the note is detected, an administrator who is authorized to edit the editing layer is set. The CPU 7 returns the processing to step S4.

In a case where selection of the setting button 64 is not detected (no at S6), the CPU 7 determines, based on whether selection of the review button 63 is detected, whether a review instruction for the currently selected note is detected (S8). In a case where the review instruction is detected (yes at S8), the CPU 7 executes processing to request a review concerning the selected note (S16 to S22). The processing to request the review will be described later. In a case where the review instruction is not detected (no at S8), the CPU 7 executes processing to select a page to be edited or viewed from the list of pages displayed in the page selection field 65, based on the detection results of the input unit 36 (S9).

Following step S5 or step S9, the CPU 7 determines whether the mode of the note including the page acquired in step S5 or the page selected in step S9 is "normal" (S10). In a case where the mode is "normal" (yes at S10), the CPU 7 displays a normal editing screen 70 (S11). As shown in FIG. 4, the editing screen 70 includes the editing area 71, a button display area 72, and a display area 74. The editing area 71 is an area where objects can be edited. In the initial state, no objects are in the editing area 71. Objects are placed in the editing area 71 according to an editing operation by a user of any of the terminal devices 3. In the example shown in FIG. 4, the editing area 71 includes objects J1 to J6. The objects J1 to J6, edited by the user A, represent a layout proposal of a lion area, a tiger area, and a pond, in the zoo. The object J1 is the text "LION", and the object J2 is a rectangle surrounding the object J1. The object J3 is the text "TIGER", which is placed below the objects J1 and J2. The object J4 is a rectangle surrounding the object J3. The object J5 is the text "POND", and the object J6 is a circle surrounding the object J5 and is placed to the left of the objects J1 to J4.

The button display area 72 displays a plurality of buttons 81 to 89, 73, and 63, which are selected in a case where designating the editing attributes that indicate the type of object to be edited, or the editing content. The editing attributes of the present embodiment include strokes, markers, text, shapes, and images. A stroke is a line, such as a straight line or curve, extending to the position indicated by the detection signal. A marker is a line with a predetermined width used for coloring. Text may be letters, numbers, or symbols arranged within a rectangular text block (not shown in the drawings). Shapes are either plane figures or solid figures. Images may be still images or moving images. The editing content in the present embodiment includes adding, deleting, and moving objects, and changing colors, sizes, and fonts.

The button 81 is selected when adding a stroke. The button 82 is selected when erasing an object. The button 83 is selected when adding a marker. The button 84 is selected when adding text. The button 85 is selected when adding a shape. The button 86 is selected when adding an image. The button 87 is selected when changing the color of an object. The button 88 is selected when changing the thickness of a stroke. The button 89 is selected when sending notifications to other users who are co-editing the editing area 71. The button 73 is selected when setting the layers configured in the editing area 71. The CPU 7 of the present embodiment is configured to set, as layer settings, the display/hidden status and editability of objects for each layer.

The CPU 7 determines whether a selection of a review instruction is detected based on whether the button 63 is selected (S15). In a case where the selection of the review instruction is not detected (no at S15), the CPU 7 determines whether the editing instruction is detected (S24). In the terminal device 3A, in a case where the button 84 is selected in a state where no object is placed in the editing area 71, and the text "LION" is input, the CPU 7 of the terminal device 3A determines that the editing instruction is detected (yes at S24). The CPU 7 edits the editing layer set in the editing area 71, and displays the edited editing area 71 on the display 35 (S25). The CPU 7 stores the history information of the object J1 in the history information storage area 39.

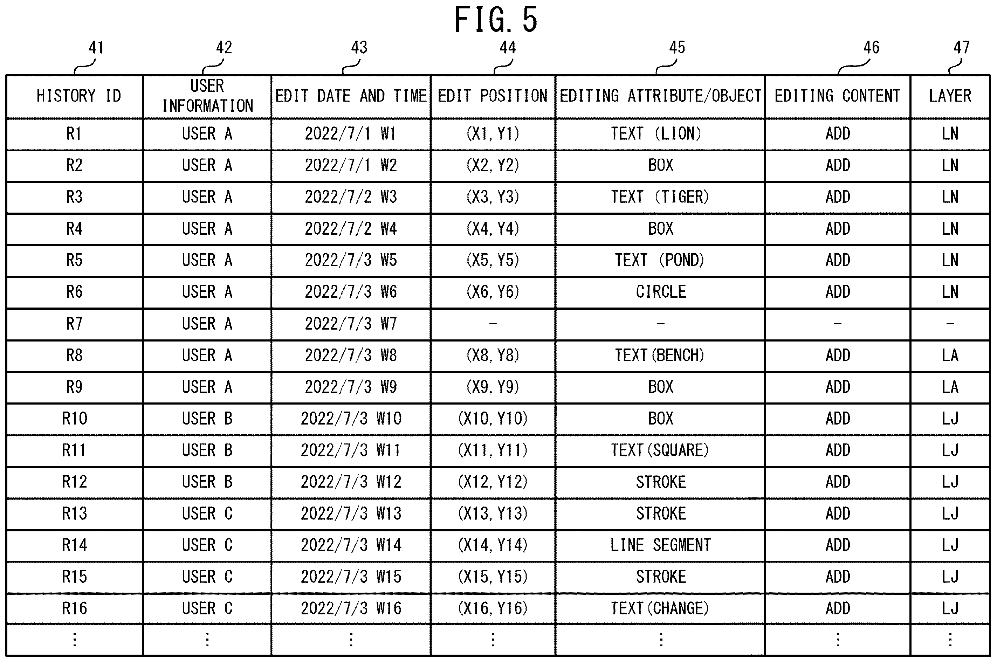

The history information indicates a history corresponding to an editing operation. As shown in FIG. 5, the history information in the present embodiment includes a history ID 41, user information 42, an edit date and time 43, an edit position 44, an editing attribute/object 45, editing content 46, and a layer 47. The history ID 41 is the identification information of the history information. The history ID 41 in the present embodiment is a string that combines the letter "R" and a number indicating the storage order. In the description below, the history ID 41 is used to identify the history information. For example, history information R1 represents the history information where the history ID 41 is "R1".

The user information 42 may be any piece of information that can identify the user of terminal device 3. The user information 42 can be the user's name or the identification information of the terminal device 3. The user information 42 of the present embodiment is the user name, and the CPU 7 sets the user information of the history information R1 to "user A," indicating that the editing operation was performed by the user A. The edit date and time 43 indicates a representative point in time when a single editing operation was carried out, and in the present embodiment, the representative point in time represents the time when the editing operation was completed. The CPU 7 sets "July 1, 2022 W1" as the date and time the editing operation was completed in the edit date and time of the history information R1. In FIG. 5, the string that combines the letter "W" of W1, for example, with a number indicating the storage order, is information indicating a time that is simplified for convenience of description.

The edit position 44 indicates the position of a representative point within the editing area 71 (refer to FIG. 4) of an object edited by the editing operation using coordinate data. The origin of the coordinate data may be set appropriately, for example, the origin of the coordinate data may be located at the top left corner of the editing area 71. The left-right direction of the editing area 71 corresponds to the X-axis direction. The up-down direction of the editing area 71 corresponds to the Y-axis direction. The representative point, for example, is either the center or any vertex of a rectangle that encloses the object. The CPU 7 sets (X1, Y1) at the edit position 44 of the history information R1.

The editing attribute/object 45 indicates the type of object to be edited and the object itself. The CPU 7 sets "text (LION)" as the editing attribute/object 45 in the history information R1. The editing content 46 indicates the edit made to the object. The CPU 7 sets 'add' to the editing content 46 of the history information R1. The layer 47 indicates the layer where the object to be edited is placed.

The CPU 7 of the terminal device 3A sends the history information R1 to the server 2. The editing system 1 of the present embodiment is configured to store the history information in the history information storage area 28 for each editing area 71. In the present embodiment, the history information stored in the history information storage area 28 is the same as the history information stored in the history information storage area 39. In a case where the server 2 receives the history information R1, the server 2 stores the history information R1 in the history information storage area 28 as the history information of the editing area 71, and, in cooperation with the terminal device 3A that sent the history information R1, sends the history information R1 and the display information to the terminal device 3 currently logged in, among the other terminal devices 3 that are editing the editing area 71. In a case where the CPU 7 of the terminal device 3B receives the history information R1 of the terminal device 3A from the server 2, the CPU 7 displays the editing content of the user A on the display 35 based on the received history information R1 and display information. The CPU 7 of the terminal device 3B stores the received history information R1. After executing the processing at step S25, the CPU 7 executes the processing at step S29.

In a case where no editing instruction is detected (no at S24), the CPU 7 determines whether an instruction to perform layer settings is detected based on whether the button 73 is selected (S26). In a case where the instruction to set a layer is detected (yes at S26), the CPU 7 sets a layer according to the instruction (S27). In a case where no instruction to set a layer is detected (no at S26), the CPU 7 determines whether a review instruction is received from another terminal device 3 (S28). In a case where the review instruction is received (yes at S28), the CPU 7 returns the processing to step S16. In a case where a review notification is not received (no at S28), or immediately after step S27, the CPU 7 executes the processing at step S29.

In a case where the review instruction is detected while the page P1 is displayed on the terminal device 3A (yes at S15), the CPU 7 executes processing to request a review regarding the note N1 that includes the currently selected page P1 (S16 to S22). The request for review in the present embodiment is performed on a note basis. The CPU 7 determines whether an instruction to configure review settings is detected (S16). The review settings are the settings that designate the conditions for a review. As shown in FIG. 3, a review setting RK of the present embodiment includes a deadline 91, a reminder time 92, a reviewer 93, a group 94, approval information 95, and a reminder 96. The deadline 91 is the deadline by which the review is to be conducted, and the reminder time 92 is the time at which a reminder is to be sent. The reviewer 93 is selected from among users who have access rights to the note to be reviewed. The user who input the review instruction can be selected as the reviewer 93 of the present embodiment, but the user who input the review instruction need not necessarily be selectable as a reviewer. The review settings of the present embodiment further allow the setting of required reviewers as a type of reviewer. A required reviewer is a reviewer who has the authority to approve the editing content of the editing area 71 to be reviewed. The group 94 is any group to which the reviewer 93 belongs. For example, in a case where the editing system 1 is used in a corporate organization, the group could be a department, and the required reviewer could be the department head. The approval information 95 stores information on whether to approve the editing content of the editing area 71 to be reviewed. The approval information 95 in the present embodiment includes approval results, approval date and time, and page ID. The initial value of the approval result is "Pending," indicating that the approval information is not input. The approval result is set to either approved or not approved based on the input of the reviewer. The page ID is the ID of the approved page. In other words, in the present embodiment, a determination of whether to approve is made for each page included in the note. An approval result of "not approved" is one in which none of the pages included in the note are approved. The approval date and time indicate a date and time when the approval result was last set. The reminder 96 stores information about whether a reminder is sent to the reviewer. The initial value of the reminder 96 is "not sent," indicating that the reminder is not sent, and the value of the reminder 96 is updated to "sent" once a reminder is sent.

In a case where the instruction to configure the review settings is detected (yes at S16), the CPU 7 displays the setup screen on the display 35 (S17) and accepts the designation of the review conditions until an instruction to end the review settings is detected (no at S18). In a specific example, the user A designates all users who have access rights to the note N1 as reviewers, and designates the user A and the user B as the required reviewers. The user A sets the deadline to one week later and the reminder sending time to five days later. In a case where an instruction to end the review settings is detected (yes at S18), the CPU 7 acquires the review setting RK input via the input unit 36 (S19).

In a case where the review settings are not set (no at S16), the CPU 7 acquires default review settings (S20). The default review settings may be preset or set by the user. After step S19 or step S20, the CPU 7 sets the mode of the note, for which the review instruction was acquired, to "review" (S21). As shown in Table T2 of FIG. 3, the CPU 7 sets the mode to "review" and stores the review setting RK acquired in step S19 or step S20 in the review information 56. The CPU 7 sends update information to the server 2 indicating that the mode of the note, for which the review instruction was acquired, is changed to "review" (S22). The CPU 7 sends a send-start-notification request, which includes the review setting RK acquired in step S19 or step S20, to the server 2 (S23). The processing in step S23 is a processing for sending the review instruction to the reviewer via the server 2. The review instruction includes the review deadline 91 and the reminder time 92 for sending a reminder to the reviewer. Upon receiving the send-start-notification request, the server 2 sends the review instruction to the reviewer included in the send-start-notification request. The CPU 7 determines whether an instruction to end the main processing is acquired (S29). In a case where the end instruction is not acquired (no at S29), the CPU 7 returns the processing to step S4. In a case where the end instruction is acquired (yes at S29), the CPU 7 terminates the main processing at this point.

In a case where the user A, who sent the review instruction, continues with the main processing, the CPU 7 of the terminal device 3A determines that the mode of the note N1, which includes the currently selected page P1, is not "normal" (no at S10) but is "review" (yes at S12). Based on acquisition of the review instruction, the CPU 7 restricts the editing of the editing layer and executes review processing to edit the review layer set in the editing area 71 based on the editing instruction (S13).

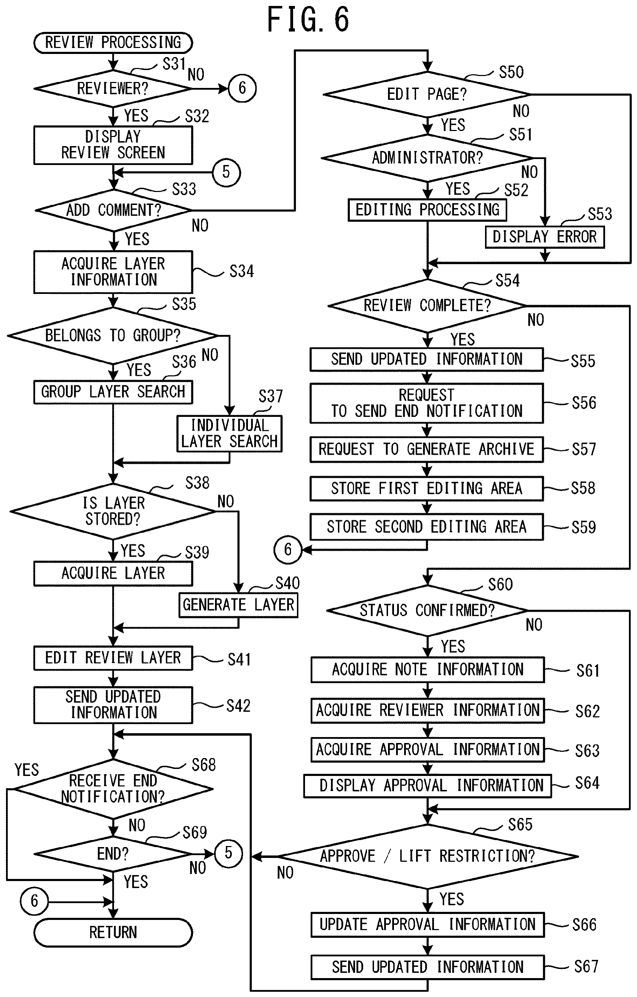

As shown in FIG. 6, in the review processing, it is determined whether the user A of the terminal device 3A is a reviewer of the note N1 that contains the currently selected page P1 (S31). In a case where the user of the terminal device 3 is not a reviewer of the note N1 that includes the selected page P1 (no at S31), the CPU 7 terminates the review processing and returns to the main processing.

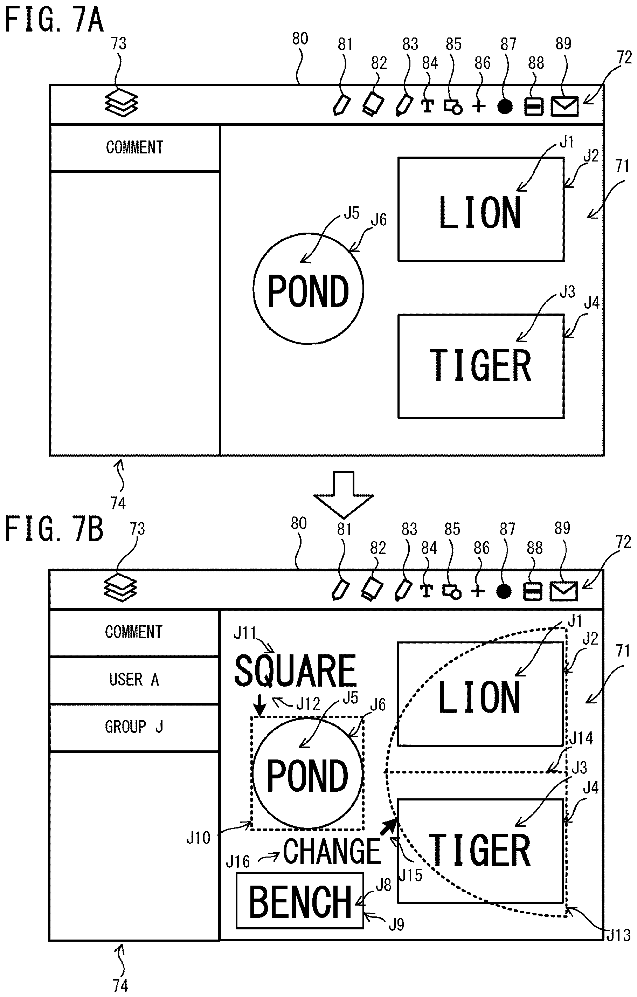

Since the user A of the terminal device 3A is the reviewer of the note N1, which includes the current page P1 (yes at S31), the CPU 7 displays the review screen 80 as shown in FIG. 7A on the display 35 (S32). The items displayed in the display area 74 of the review screen 80 differ from the items displayed in the display area 74 of the editing screen 70 displayed in a normal mode. On the display area 74 of the review screen 80, an item for selecting a review layer, which is generated separately from the editing layer, is displayed. In the present embodiment, the review layer is generated on a per-user basis or a per-group basis, based on with the editing instruction for objects being input by the reviewer.

The CPU 7 determines whether an instruction to add a comment is detected (S33). In a case where an object J8 is added to terminal device 3A (yes at S33), the CPU 7 acquires the layer information of the page P1 (S34). The object J8 is the text "BENCH". The CPU 7 determines whether the user A belongs to a group (S35). Because the user A does not belong to a group (no at S35), the CPU 7 searches whether the individual layer of the user A is included in the layer information acquired at step S34 (S37). It is determined that the individual layer of the user A is not included (no at S38), and as shown in Table T3 of FIG. 3, so the CPU 7 generates a review layer LA, which is an individual layer of the user A (S40). By the processing at step S40, the review layer is generated in a case where a first editing instruction is acquired after acquiring the review instruction. As described above, in the present embodiment, the CPU 7 designates the reviewer who input the editing instruction as the target reviewer, and after receiving a review instruction, generates a target layer, which is the review layer corresponding to the target reviewer, In a case where the first editing instruction is acquired from the target reviewer.

The CPU 7 follows the editing instruction and edits the review layer, which is different from the editing layer, set in the editing area 71, and displays the edited editing area 71 on the display 35 (S41). Specifically, as the processing to edit the review layer LA generated at step S40, the CPU 7 adds the object J8 to the review layer LA based on the editing instruction from the user A acquired at step S33. The CPU 7 stores history information R8 corresponding to the object J8 in the history information storage area 39. In this way, the CPU 7 edits the target layer based on the editing instruction input by the target reviewer and does not accept editing of the target layer by reviewers other than the target reviewer. In other words, the review layer LA is edited based on the editing instruction from the user A, but the review layer LA is not edited based on the editing instruction from the user B or the user C. No apparent difference can be seen between a case where user A edits the editing layer LN and a case where user A edits the review layer LA, because both the editing layer and the review layer are displayed on the display 35.

The CPU 7 sends the update information concerning the addition of the object J8 to the server 2 (S42). The CPU 7 determines whether the CPU 7 receives the end notification from the server 2 to end the review (S68). In a case where the end notification is received (yes at S68), the CPU 7 displays "Review completed." on the display 35, terminates the review processing, and returns the processing to the main processing in FIG. 2. In a case where the end notification is not received (no at S68), the CPU 7 determines whether the CPU 7 acquires an instruction to end the review processing (S69). In a case where the CPU 7 does not acquire an instruction to end the review processing (no at S69), the CPU 7 returns the processing to step S33.

Similarly, in a case where an object J9 is added in the terminal device 3A (yes at S33), the CPU 7 acquires the layer information of the page P1 (S34, no at S35, S37), and determines that the review layer LA, which is the individual layer of the user A, is included (yes at S38). The object J9 is a rectangle surrounding the object J9. The CPU 7 acquires the review layer LA of the user A (S39) and adds the object J9 based on the editing instruction acquired at step S33 to the acquired review layer LA (S41). The CPU 7 stores the history information R9 corresponding to the object J9 in the history information storage area 39 and sends update information regarding the addition of the object J9 to the server 2 (S42). In a case where the end notification is not received (no at S68) and an instruction to end the review processing is acquired (yes at S69), the CPU 7 then terminates the review processing, returns to the main processing, and terminates the main processing.

In the terminal device 3A, in a case where an instruction to add a comment is not detected (no at S33), the CPU 7 determines whether an editing instruction is detected while in the state where the editing layer is selected (S50). In a case where an instruction to edit the editing layer is detected (yes at S50), the CPU 7 determines whether the user A of the terminal device 3A is the administrator of the note N1 under review (S51). In a case where the user A is not the administrator (no at S51), the CPU 7 displays an error message on the display 35, notifying the user that they do not have the authority to edit the editing layer (S53). In a case where the user A is the administrator (yes at S51), the CPU 7 executes the editing processing to modify the editing layer of the editing area 71 based on the editing instruction acquired at step S51 (S52). The CPU 7 then sends update information, including the content edited at step S52, to the server 2.

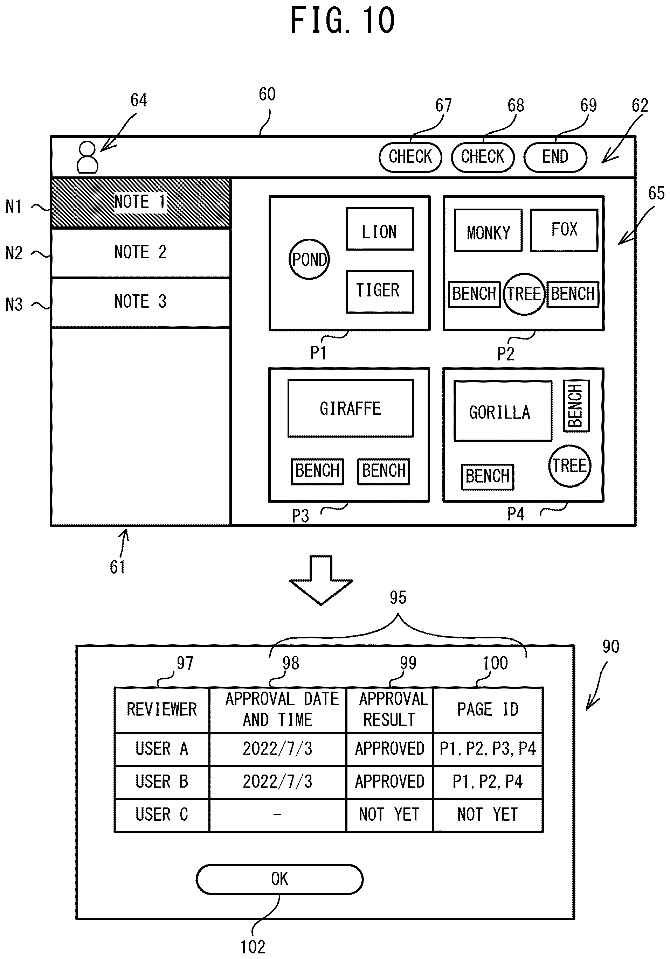

After step S52 or step S53, the CPU 7 determines whether an instruction for ending the review is detected (S54). As shown in FIG. 10, in the present embodiment, in a case where a note selected on the home screen 60 is in review mode, buttons 67 to 69 appear in place of the button 63 in the button display area 62. The button 67 is selected when checking the review status. The button 68 is selected when inputting approval information for the selected note N1. The button 69 is selected to end the review. The user who sent the review instruction can, for example, select the button 69 to end the review before the deadline in a case where the review is completed ahead of time. In a case where the selection of the button 69 is detected (yes at S54), the CPU 7 sends update information indicating the end of the review for the selected note N1 to the server 2 (S55). The CPU 7 sends a send-end-notification request to the server 2 (S56). The send-end-notification request is a request that a request to send, to the reviewer, the end notification indicating completion of the review.

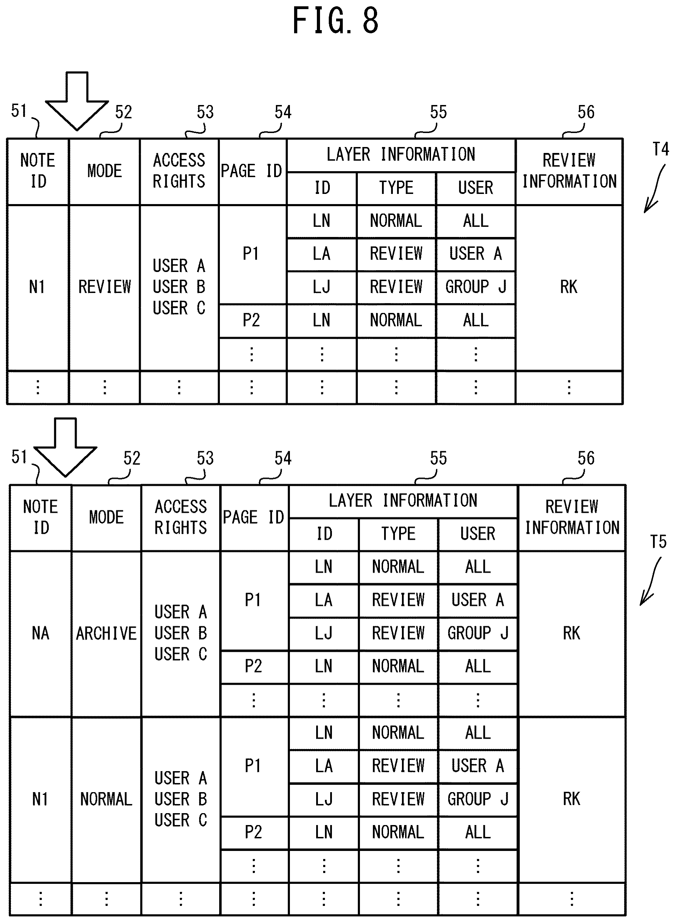

The CPU 7 sends an archive generation request to the server 2, requesting the generation of an archive for the note N1 to be reviewed (S57). Upon receiving the archive generation request, the server 2 stores the first editing area 71 and the second editing area 71 through server processing, described later, and updates the note information. The server 2 sends the updated note information to the terminal device 3 that is connected to server 2. The CPU 7 of the terminal device 3 stores each of the first editing area 71 and the second editing area 71 in the note information storage area 40, as shown in Table T5 of FIG. 8 (S58, S59). Specifically, the CPU 7 sets the mode of the note N1 to "normal" and generates a copy of the note information of the note N1. The CPU 7 sets the mode of the note information with a note ID of NA, among two pieces of note information with the same content, to "archive", establishing the note information as the first editing area 71, and stores each of the editing layer and the review layer of the first editing area 71 with editing disabled (S58). The CPU 7 sets the mode of the note information having a note ID of N1 to "normal", establishing the note information as the second editing area 71, and sets the editing layer of the second editing area 71 to "editable" and the review layer to "non-editable", and then stores them (S59). For the note information with the note ID of NA, the mode is set to "archive", so simply viewing is permitted for the first editing area 71, and editing is not allowed. For the note information with the note ID of N1, the mode is set to "normal", so the editing layer of the second editing area 71 is permitted for viewing and editing. The CPU 7 then terminates the review processing and returns the processing to the main processing of FIG. 2.

In a case where the selection of the button 69 is not detected (no at S54), the CPU 7 determines whether the selection of the button 67 is detected (S60). In a case where the selection of the button 67 is detected (yes at S60), the CPU 7 acquires the note information of the currently selected note N1 (S61). The CPU 7 acquires the reviewer information (S62). The CPU 7 acquires approval information indicating whether the reviewer approved the content of the editing layer (S63). The CPU 7 displays approval information for each reviewer on the display 35, and display, on the display 35, reviewers who approves the content of the editing layer and reviewers who does not approve the content of the editing layer in a distinguishable manner (S64). Specifically, as shown in FIG. 10, the CPU 7 displays a screen 90 on the display 35. The screen 90 includes a reviewer 97 and approval information 95. The approval information 95 includes an approval date and time 98, an approval result 99, and a page ID 100. On the screen 90, it is indicated that the user A and the user B gave approval on July 3, 2022, while the user C does not yet input the approval information 95. A button 102 is selected when closing the screen 90. The screen 90 may automatically close after being displayed for a predetermined period of time.

In a case where selection of the button 67 is not detected (no at S60), or after step S64, the CPU 7 determines whether the selection of the button 68 is detected (S65). In a case where selection of the button 68 is detected (S65), the CPU 7 updates the approval information for the user A (S66). The CPU 7 sends the update information, which includes the approval information updated at step S66, to the server 2 (S67). In a case where selection of the button 68 is not detected (no at S65), or after step S67, in a case where the CPU 7 receives the end notification (yes at S68), or in a case where an instruction to end the review processing is acquired (no at S68, yes at S69), the CPU 7 terminates the review processing at this point, returns to the main processing in FIG. 2, and terminates the main processing.

In a case where the user B, who receives a review instruction, starts the main processing (S1 to S3), the CPU 7 of the terminal device 3B determines that the mode of the note N1, which includes the selected page P1, is not "normal" (no at S10) but is "review" (yes at S12). The CPU 7 executes the review processing (S13). As shown in FIG. 6, during the review processing, it is determined that the user B of the terminal device 3B is the reviewer of the note N1 including the currently selected page P1 (yes at S31, S32).

In a case where an object J10 shown on the review screen 80 in FIG. 7B is added to the editing area 71 of the review screen 80 in FIG. 7A (yes at S33), the CPU 7 acquires the layer information of the page P1 (S34) and determines that the user B belongs to a group J (yes at S35). The object J10 is a rectangle that encloses the objects J5 and J6. The CPU 7 searches whether the layer information acquired at step S34 includes the layer of the group J to which the user B belongs (S36). It is determined that the layer of the group J to which the user B belongs is not included (no at S38), and as shown in Table T4 of FIG. 8, the CPU 7 generates the review layer LJ of the group J to which the user B belongs (S40). In this manner, the CPU 7 regards the group to which the reviewer who input the editing instruction belongs as the "target group." After acquiring the review instruction, in a case where the initial editing instruction are acquired from any reviewer belonging to the group, the CPU 7 generates a "target group layer," which is a review layer corresponding to the target group.

Based on the editing instruction input by the reviewer belonging to the group to edit the target group layer, the CPU 7 executes processing to edit the target group layer by adding the object J10 to the generated review layer LJ (S41) following the editing instruction acquired at step S33. The CPU 7 stores the history information R10, which corresponds to the object J10, in the history information storage area 39. The CPU 7 does not accept editing of the target group layer by reviewers who do not belong to the target group. The CPU 7 sends update information regarding the addition of the object J10 to the server 2 (S42).

Similarly, in a case where objects J11 and J12 are sequentially added by the terminal device 3B (yes at S33), the CPU 7 acquires the layer information of the page P1 (S34, yes at S35, S36) and determines that the review layer LJ for the group J, to which the user B belongs, is included (yes at S38). The object J11 is the text "SQUARE", and the object J12 is an arrow-shaped stroke placed between the object J10 and the object J11. The CPU 7 acquires the review layer LJ of the group J to which the user B belongs (S39), and adds the objects J11 and J12 to the acquired review layer LJ based on the editing instruction acquired at step S33 (S41). The CPU 7 stores the history information R11 and R12 corresponding to the objects J11 and J12 in the history information storage area 39, and sends the update information regarding the addition of the objects J11 and J12 to the server 2 (S42). In a case where the end notification is acquired (yes at S68), or in a case where an instruction to end the review processing is received (no at S68, yes at S69), the CPU 7 terminates the review processing at this point, returns to the main processing, and terminates the main processing.

In a case where the user C, who receives a review instruction, starts the main processing (S1 to S3), the CPU 7 of the terminal device 3C determines whether the mode of the note N1, which includes the selected page P1, is not "normal" (no at S10), but is "review" (yes at S12), and executes the review processing (S13). As shown in FIG. 6, during the review processing, it is determined that the user C of the terminal device 3C is the reviewer of the note N1 including the selected page P1 (yes at S31, S32).

In a case where an object J13 is added (yes at S33), the CPU 7 acquires the layer information of the page P1 (S34) and determines that the user C belongs to the group J (yes at S35). The object J13 is a semicircular stroke drawn to enclose the objects J1 and J3. The CPU 7 determines that the review layer LJ of the group J to which the user C belongs, is included in the layer information acquired in S34 (S36, yes at S38), and acquires the review layer LJ of the group J to which the user C belongs (S39). The CPU 7 adds the object J13 to the acquired review layer LJ based on the editing instruction acquired at step S33 (S41). The CPU 7 stores the history information R13 corresponding to the object J13 in the history information storage area 39 and sends the update information regarding the addition of the object J13 to the server 2 (S42). Similarly, the processing of adding objects J14 through J16 is executed at the terminal device 3C. The object J14 is a line segment extending horizontally between the objects J1 and J3. The object J15 is an arrow-shaped stroke. The object J16 is the text "CHANGE" positioned above the object J10. In a case where the end notification is acquired (yes at S68), or in a case where an instruction to end the review processing is acquired (no at S68, yes at S69), the CPU 7 terminates the review processing at this point, returns to the main processing, and terminates the main processing.

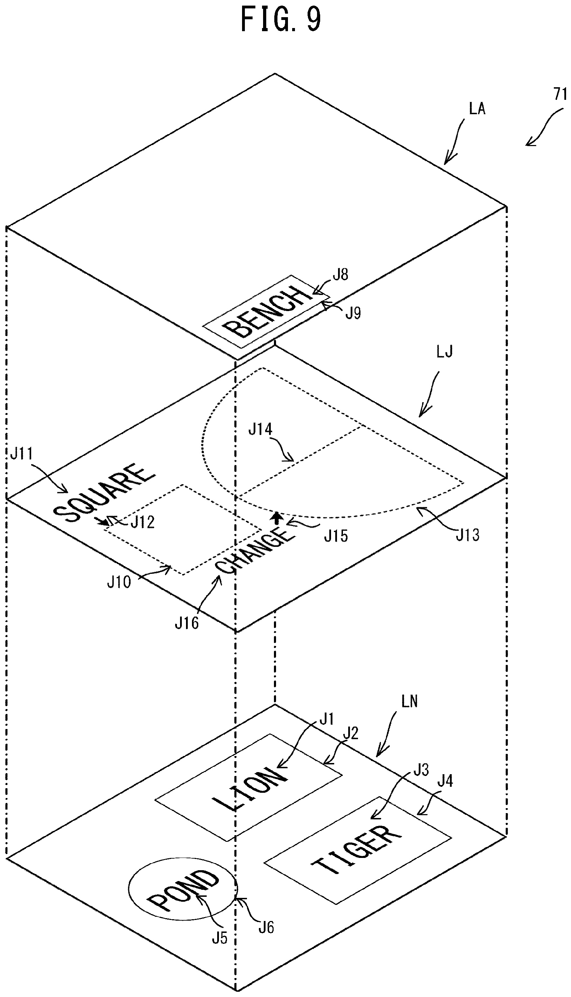

With the above processing, as shown in FIG. 9, the editing area 71 is configured with the editing layer LN, the review layers LA, and LJ. The objects J1 to J6 are placed on the editing layer LN. The review layer LA contains the objects J8 and J9, which were edited by the user A. The review layer LJ contains the objects J10 to J12, edited by the user B, and the objects J13 to J16, edited by the user C.

In the processing at step S58, after the note NA with the mode set to "archive" is stored, in a case where a page included in the note NA is selected (no at S10, no at S12), the CPU 7 allows simply the viewing of the selected page and does not accept any editing instructions (S14). At this time, the CPU 7 may display a screen similar to the normal editing screen 70, allowing input of the editing instruction, or the CPU 7 may display a screen which is different from the editing screen 70 for in a case where the mode is "archive", in which case the editing instruction cannot be input. Having completed the above, the CPU 7 terminates the main processing.

In the processing at step S59, after the note N1 with the mode set to "normal" is stored, in a case where a page included in the note N1 is selected (yes at S10), the CPU 7 displays the normal editing screen 70 on the display 35. In a case where an editing instruction for the editing layer is detected (no at S15, yes at S24), the editing layer is edited based on the editing instruction (S25), but in a case where an editing instruction for the review layer is detected (no at S15, yes at S24), the CPU 7 does not execute processing to edit the review layer based on the editing instruction. In a case where an instruction to end the main processing is detected (yes at S29), the CPU 7 terminates the main processing. In the above main processing, in the editing area 71 where the mode is "normal" and contains the review layer, in a case where a review is to be conducted again, the CPU 7 sets past review layers to an uneditable state, and executes processing by adding a new review layer to be newly reviewed based on the reviewer's input of editing instruction.

The server processing executed by the server 2 will be described with reference to FIG. 11. In a case where the CPU 6 is powered on, the CPU 6 reads out the server program from the program storage area 25 shown in FIG. 1. By executing the read-out server program, the CPU 6 starts the server processing shown in FIG. 11. Some or all parts of the server processing may be executed by the terminal device 3.

As shown in FIG. 11, the CPU 6 of the server 2 determines whether the CPU 6 receives a login notification from the terminal device 3 (S71). In a case where a login notification is received from the terminal device 3A (S71), the CPU 6 executes login processing for the terminal device 3A based on the received notification (S72). In a case where the login processing is successful, the CPU 6 sends the note information of the note, for which the terminal device 3A that sent the notification has access rights, to terminal device 3A (S73). The CPU 6 determines whether the note information with the mode set to "review" is stored in the note information storage area 29 (S74).

In a case where the note information with the mode set to "review" is stored (yes at S74), the CPU 6 then determines whether a deadline check time point is reached (S75). In the present embodiment, the CPU 6 determines, at predetermined intervals, whether the deadline set by the review settings is exceeded. The predetermined intervals may be set in advance or designated by the user. The server 2 in the present embodiment uses the top of every hour as the deadline check time point, executing the following steps every hour. In a case where it is not the deadline check time point (no at S75), the CPU 6 executes the processing described later in step S91. In a case where it is the deadline check time point (yes at S75), the CPU 6 determines whether a deadline is set in the review settings (S76). In a case where none of the note information is set a deadline (no at S76), the CPU 6 executes the processing described later in step S91. In a case where at least one piece of the note information is set a deadline (yes at S76), the CPU 6 executes the following processing for each piece of the note information with the set deadline. The CPU 6 extracts note information that is passed the set deadline (S77).

The CPU 6 extracts note information that meets an end condition among note information whose deadline is not passed (S78). The end condition in the present embodiment is a condition where approval information from all the reviewers or from all the required reviewers is set. For example, in the case where the approval information shown on the screen 90 of FIG. 10 is acquired, since the approval information of all reviewers is not stored, the note N1 does not meet the end condition. On the other hand, in the screen 90, in a case where the user A and the user B are set as required reviewers, since approval information from all required reviewers is set, the note N1 fulfills the end condition. In a case where at least one piece of the note information is extracted at step S77 or step S78 (yes at S79), for each piece of the note information that meets the end condition extracted at step S78 and the note information with an expired deadline extracted at step S77, the CPU 6 sets the mode of the note information to "normal" (S80). Through the processing at step S80, the CPU 6 terminates the review of the editing layer (S80) when the review deadline is reached (S77, S80). In a case where the review deadline is not reached, the CPU 6 terminates the review (S80) based on the stored approval information of all reviewers or the required reviewers (S78).

The CPU 6 copies the note information, which was set to the normal mode at step S80, to the note information storage area 29 (S81). The CPU 6 sets the mode of the note information whose note ID is NA and which is one of two pieces of the note information with the same content, to "archive", establishing it as the first editing area 71. Each of the editing layer and review layer of the first editing area 71 is set to "non-editable" and then stored (S82). The CPU 6 sets the mode of the note information whose note ID is N1 and which is other note information, to "normal", establishing it as the second editing area 71, and sets the editing layer of the second editing area 71 to "editable" and the review layer to "non-editable", and then stores them (S83). As shown in Table T5 of FIG. 8, each of the first editing area 71 with the note ID being NA and including the editing layer and the review layer, and the second editing area 71 with the note ID being N1 and including the editing layer, is stored in the note information storage area 29 based on completion of the review of the editing layer, by the processing at step S81 to step S83. The CPU 6 sends the end notification to the reviewer and the user who requested the review, informing them that the review completed (S84). The CPU 6 returns the processing to step S71.

In a case where none of the note information is extracted in step S77 or step S78 (no at S79), the CPU 6 determines whether it is a reminder time (S91). The CPU 6 of the present embodiment determines, at predetermined intervals, whether the reminder time set in the review settings is passed. The predetermined intervals may be set in advance or may be intervals designated by the user. The server 2 of the present embodiment sets every 30 minutes as the reminder time and executes the following processing every hour. In a case where it is not the reminder time (no at S91), the CPU 6 executes the processing described later in step S99. In a case where it is the reminder time (yes at S91), the CPU 6 determines whether the note information set with a reminder time in the review settings is stored (S92). In a case where no note information set with a reminder time is stored (no at S92), the CPU 6 executes the processing described later in step S99. In a case where at least one piece of the note information set with a reminder time is stored (yes at S92), the CPU 6 determines whether the note information for which a reminder is sent is stored (S93). In a case where simply note information for which a reminder is sent is stored (yes at S93), the CPU 6 executes the processing at step S99. In a case where note information for which a reminder is not sent is stored (no at S93), the CPU 6 determines whether the set reminder time is passed in the note information for which a reminder is not sent (S94).

In a case where no note information for which the reminder time is passed is stored (no at S94), the CPU 6 executes the processing described later in step S99. In a case where no note information that is passed the reminder time is stored (yes at S94), the CPU 6, in review mode, acquires approval information for note information whose reminder is not sent and for which the reminder time is passed (S95), and extracts reviewers who do not set approval information (S96). The CPU 6 sends reminders to the reviewers extracted at step S96 (S97). Through the processing at step S97, the CPU 6 sends a reminder to the reviewer in a case where the sending time is reached. The CPU 6 sets "sent" in the reminder 96 of the review settings corresponding to the reviewer to whom the reminder was sent, indicating that the reminder is sent (S98). The CPU 6 returns the processing to step S71.

The CPU 6 determines whether the CPU 6 receives update information from the terminal device 3 (S99). In a case where update information is received (yes at S99), the CPU 6 stores the update information (S100), and updates the display information, the note information, and the history information. The CPU 6 sends the display information, the history information, and the note information that correspond to the update information to the terminal device 3 of the user who has access rights to the note related to the update information.

In a case where update information is not received (no at S99), or after step S100, the CPU 6 determines whether a notification request is received (S101). In a case where the CPU 6 receives a notification request (yes at S101), the CPU 6 updates the history information and the note information as appropriate based on the received notification request (S102), and sends a designated notification to the other terminal device 3 designated by the notification request (S103). For example, in a case where the CPU 6 acquires a send-start-notification request (yes at S101), the CPU 6 updates the history information and the note information based on the send-start-notification request (S102), and changes the mode of the note information designated in the send-start-notification request to "review". The CPU 6 sends the start notification, which includes the review instruction, to the reviewer designated in the send-start-notification request (S103). In a case where CPU 6 acquires a send-end-notification request (yes at S101), the CPU 6 updates the history information and the note information based on the send-end-notification request (S102), and changes the mode of the note information designated in the send-end-notification request to "normal". The CPU 6 sends the end notification to notify the reviewer designated in the send-end-notification request that the review completed (S103).

In a case where no notification request is received (no at S101), or after step S103, the CPU 6 determines whether the CPU 6 receives an archive generation request (S104). In a case where the archive generation request is received (yes at S104), the CPU 6 copies the note information to the note information storage area 29 just like in step S81 to step S83 (S105). Out of two pieces of the note information the same content, set the mode of one piece of the note information to "archive" (S106) while setting the mode of the other piece of the note information to "normal" (S107). As a result of the processing from S104 to S106, the ending of the review of the editing layer leads to each of the first editing area 71, including the editing layer and review layer, and the second editing area 71, including the editing layer, being stored in the note information storage area 29. In a case where the CPU 6 does not receive an archive generation request (no at S104), or after step S107, the CPU 6 returns the processing to step S7. Although not shown in the drawings, the server processing is terminated in a case where an end instruction is detected.

In the above embodiment, the editing system 1, the server 2, the terminal device 3, the display 35, and the CPU 7 are each an example of the editing system, the server, the computer, the display, and the processor of the present invention.

The editing program of the above embodiment includes instructions that execute the following processing on the CPU 7 of the terminal device 3, which is equipped with the display 35 and the CPU 7. The CPU 7 edits the editing layer set in the editing area 71 based on the editing instruction that instructs editing of the editing area 71, and displays the editing area 71 that is edited on the display 35 (S25). The CPU 7, based on acquisition of the review instruction to review the editing layer, restricts the editing of the editing layer and, following the editing instruction, edits a review layer different from the editing layer set in the editing area 71, and displays the edited editing area 71 on display 35 (S41). Based on completion of the review of the editing layer, the CPU 7 lifts the restriction on editing the editing layer (S59). The editing program can edit comments and such on the review layer based on the editing instruction, in the case where the editing instruction is acquired during the review. Therefore, the editing program contributes to avoiding the editing layer from being inadvertently edited during the review.

The editing program includes instructions for the CPU 7 to send the review instruction to the reviewer (S23). In step S41, the CPU 7 restricts editing of the editing layer based on receiving a review instruction and edits the review layer set in the editing area 71 based on the editing instruction (S41). The editing program allows for processing, such as requesting reviewers to review the editing area 71 or being requested by other users to review editing area 71. The editing program contributes to avoiding inadvertent editing of the review-targeted editing layer in the case where a review request is made.

The editing program includes an instruction for the CPU 7 to generate a review layer after acquiring a review instruction and the first editing instruction (S40). The CPU 7 edits the generated review layer based on the editing instruction (S41). The editing program contributes to avoiding the generation of unnecessary review layers, where nothing is edited, compared to in the case where review instructions trigger the unconditional generation of a review layer.

The editing program includes instructions for the CPU 7 to generate the target layer (S40), which is the review layer corresponding to the target reviewer, after the reviewer who input the editing instruction is designated as the target reviewer, and a review instruction is acquired, in the case where the first editing instruction is acquired from the target reviewer (S37, no at S38). The CPU 7, in step S41, edits the target layer based on the editing instruction input by the target reviewer and does not accept any editing to the target layer by reviewers other than the target reviewer. The editing program contributes to avoiding the review layer, edited based on the review instruction, from being altered by other reviewers.

The editing program includes instructions for the CPU 7 to generate the target group layer (S40), which is the review layer corresponding to the target group, after the group to which the reviewer who input the editing instruction belongs is designated as the target group, and a review instruction is acquired, in the case where the first editing instruction is acquired from any reviewer in that group (S36, no at S38). In step S41, the CPU 7 edits the target group layer based on the editing instruction input by reviewers belonging to the group and does not accept any editing of the target group layer by reviewers who are not part of the target group (S41). The editing program helps to reflect the editing instruction from the reviewer belonging to the same group onto the same review layer. The editing program contributes to restraining the number of layers compared to in the case where review layers are generated for each individual, thus avoiding the layer structure in the editing area 71 from becoming complicated. The editing program helps to prevent reviewers who belong to a group from editing review layers other than review layers corresponding to their group.

The editing program includes instructions for the CPU 7 to designate an administrator who can edit the editing layer (S7). In the case where the administrator inputs editing instruction (yes at S52), the CPU 7 edits the editing layer based on the editing instruction (S53). The editing program allows the administrator to edit the editing layer during the review. The editing program can enhance convenience in a case where the need arises to edit the editing layer during review, while also avoiding inadvertent editing to the editing layer.

In the editing program, the CPU 7 stores each of the first editing area 71, which includes the editing layer and the review layer, and the second editing area 71, which includes the editing layer, based on completion of the review of the editing layer (S58, S59). The editing program allows, for example, for continuous editing of the second editing area 71 by keeping the editing area 71 that is at the review end stage as the first editing area 71, even in a case where editing of the editing area 71 is resumed after the review completed. The editing program helps users easily acquire and verify the editing area 71 at the review end stage.

The CPU 7, in step S58, sets and stores the editing layer of the first editing area 71 and the review layer as non-editable. The CPU 7 does not perform any edits based on editing instruction for the first editing area 71 (S14). The editing program contributes to ensuring that the first editing area 71 after review is not tampered with.

The second editing area 71 includes a review layer. The CPU 7 performs editing based on the editing instruction for the editing layer in the second editing area 71 at step S25, but does not perform editing based on the editing instruction for the review layer in the second editing area 71. The editing program ensures that the review layer will not be tampered with in the second editing area 71 after review, while allowing the standard layer to be edited based on the editing instruction. In the present embodiment, the CPU 7 as a layer setting allows each layer to be set as visible or invisible. Therefore, in the case where the mode is "normal", it is possible to set a review layer generated during a past review to be invisible, as appropriate.

The CPU 7 of the editing system 1, according to the editing method, acquires approval information that indicates whether the reviewer approved the editing content of the editing layer (S63). The editing program includes instructions for the CPU 7 to display, on the display 35, reviewers who approves and reviewers who does not approve the content of the editing layer in the distinguishable manner (S64). The editing program contributes to facilitating user recognition of which reviewer approved the content of the editing layer.

The review instructions include the review deadline. In the case where the review deadline is reached (yes at S77), the server 2 of the editing system 1 terminates the review of the editing layer (S80). The editing program helps to automatically end the review at a predetermined time. By executing the editing method, the editing system 1 can save the effort of inputting instructions to end the review. The editing system 1 can ensure that the editing area 71 is not left in its review state for the duration of the review period.

The review instructions include the timing for sending reminders to the reviewer. The server 2 of the editing system 1 sends a reminder to the reviewer in the case where the timing for sending arrives (S97). The editing system 1 contributes to preventing the reviewer from forgetting to review by setting the timing for sending reminders through the execution of the editing method, thus automatically sending the reminders.

The server 2 of the editing system 1 terminates the review based on the storage of approval information from all reviewers or required reviewers (S80). By executing the editing method, the editing system 1 terminates the review based on the approval information from all reviewers or required reviewers. Therefore the editing system 1 contributes to eliminating the task of checking whether the review completed compared to a system that terminates the review regardless of the approval information from all reviewers or required reviewers.

The editing program and the editing method of the present invention are not limited to the embodiment described above, and various modifications may be made without departing from the scope of the invention. For example, the following variations may be suitably applied. The invention can be executed in various forms, such as a non-transitory computer-readable medium storing an editing program, an editing device, or an editing system.

In the above embodiment, the configuration and number of the server 2 and terminal device 3 included in the editing system 1 may be changed as appropriate. The terminal device 3 is not limited to a tablet and may be a smartphone, personal computer, or dedicated terminal, for example. The display 35 of the terminal device 3 should be capable of displaying images, and could be, for example, an organic EL display, a plasma display, a plasma tube array display, or an electronic paper display using electrophoresis. The input unit 36 of the terminal device 3 may include not only a touch screen, but also devices such as a keyboard, mouse, and joystick. The terminal device 3 may be shared among a plurality of users. The main processing may be executed in the editing system 1 that includes a single terminal device 3 and server 2, or the main processing may be executed in the terminal device 3 that does not communicate with the server 2. The communication unit 37 may be omitted.

The attributes of an object may include types other than strokes, markers, characters, shapes, and images, or the attributes may include simply some types, such as solely characters. The editing units of the editing area 71 may be adjusted as appropriate. The CPU 7 may not necessarily have a note as an editing unit. The timing for storing the note information and the history information may be flexibly adjusted based on the editing units of the editing area 71. The contents of the note information and the history information may be adjusted as appropriate. The contents and layout, for example, of the home screen, editing screen, and review screen may be modified as appropriate.

The editing program that includes instructions for executing the main processing may be stored in the storage device of the terminal device 3 before the CPU 7 of the terminal device 3 executes the editing program. Therefore, the method of acquiring the editing program, the acquisition path, and each of the devices that store the program may be changed as appropriate. The editing program executed by terminal device 3 may be received from other devices via cable or wireless communication, and stored in storage devices such as a storage unit. Other devices include, for example, PCs and servers connected via a network.

Each step of the main processing is not limited to being executed by the CPU 7 and may be executed in part or in whole by other electronic devices (such as ASICs). Similarly, the steps of the server processing are not limited to execution by the CPU 6, and some or all of them may be executed by other electronic devices. The steps of the main processing and server processing may be distributed among a plurality of electronic devices, such as several CPUs. The steps of the main processing and server processing may be reordered, omitted, or added as appropriate. The following changes may be made as appropriate to the processing sequence executed by the editing system 1, which includes the main processing and server processing. Part of the main processing may be executed by the server 2, and part of the server processing may be executed by the terminal device 3.

The main processing may be completed by a single terminal device 3, in which case, the processing at step S16 to step S20 as well as the processing at steps S22, S23, and S28 may be omitted. The review layer may be generated for each reviewer in a case where a review instruction is received by server 2, regardless of whether an editing instruction is acquired. The review layer may not be generated for each reviewer individually, but instead, one or more layers may be set in advance. A plurality of review layers may be generated for one target reviewer or one target group. The group to which the reviewer belongs may be determined based on the information input by the reviewer. The CPU 7, within step S7, need not necessarily set the administrator, possibly skipping the processing at steps S50 to S53, and the CPU 7 need not necessarily accept any editing to the editing layer during the period the mode is set to "review".

The CPU 7 may execute the processing at S80 to S84. The CPU 7 may skip the processing at step S57 and may execute the processing at step S105 to step S107. In the editing system 1, based on the completion of the review, the processing to store the first editing area 71 and the second editing area 71 may be omitted. In that case, the review layer of the editing area 71 that is completed the review may be set as non-editable, may be set as editable, or may be stored separately from the editing layer. The second editing area 71 is not required to include a review layer. If the second editing area 71 includes a review layer, the review layer may be editable, or the user may set the review layer to be editable.

The review instruction need not necessarily include at least one selected from a group of a review deadline, and the timing for sending a reminder to the reviewer. In that case, the server 2 may omit or modify at least one selected from a group of the processing to manage the review deadlines at steps S75 to S84, and the processing to send reminders at steps S91 to S98. The server 2 may automatically set at least one selected from a group of the review deadlines and reminder sending times based on the timing of receiving the send-start-notification request from the terminal device 3. The CPU 7 may execute the processing to end the review of the editing layer in a case where the review deadline is reached, which was previously executed by the server 2. The CPU 7 may execute the processing to send a reminder directly to the terminal device 3 of the reviewer in a case where the sending time is reached, which was previously executed by the server 2, or the CPU 7 may send a request to the server 2 to send the reminder to the reviewer, allowing the server 2 to send the reminder. The CPU 7 may omit at least one selected from a group of steps S61 to S67 and need not necessarily execute some or all of the processing related to approval information. The CPU 7 may execute processing to end a review in a case where the approval information from all reviewers or required reviewers is stored, which was previously executed by the server 2. The CPU 7 may send reminders to reviewers who have already input approval information. The server 2 may omit step S78 and need not necessarily execute the processing to end the review in a case where the approval information from all reviewers or required reviewers is stored.

### DESCRIPTION OF SYMBOLS

1: Editing System, 2: Server, 3, 3A, 3B, 3C: Terminal Device, 6, 7: CPU, 21, 32: ROM, 22, 33: RAM, 23, 34: Flash Memory, 35: Display, 36: Input Unit, 24, 37: Communication Unit

## Claims

1. An editing program for a computer including a display and a processor, the editing program including instructions that, when executed by the processor, instruct the computer to perform processes comprising:
editing, based on an editing instruction instructing to edit an editing area, an editing layer set in the editing area, and displaying the editing area that is edited on the display;
executing a restriction on the editing of the editing layer, the restriction being based on acquisition of a review instruction instructing to review the editing layer, and editing, based on the editing instruction, a review layer, and displaying the editing area that is edited on the display, the review layer being set in the editing area and being different from the editing layer; and
lifting the restriction on the editing of the editing layer based on completion of the review of the editing layer.

2. The editing program according to claim 1, wherein
the instructions further instruct the processor to perform processes comprising:
generating the review layer in a case where the editing instruction is first acquired after the acquisition of the review instruction, and
the review layer that is generated is edited.

3. The editing program according to claim 1, wherein
the instructions further instruct the processor to perform processes comprising:
generating a target layer, in a case where the editing instruction is first acquired from a target reviewer after the acquisition of the review instruction, the target layer being the review layer corresponding to the target reviewer, the target reviewer being the reviewer who input the editing instruction; and
editing of the target layer based on the editing instruction input by the target reviewer, and editing of the target layer is not accepted from any reviewer other than the target reviewer.

4. The editing program according to claim 1, wherein
the instructions further instruct the processor to perform processes comprising:
generating a target group layer, in a case where the editing instruction is first acquired from a given reviewer belonging to a group after the acquisition of the review instruction, the target group layer being the review layer corresponding to a target group, the target group being a group to which the reviewer who input the editing instruction belongs; and
editing of the target group layer based on the editing instruction input by the reviewer belonging to the group, and editing of the target group layer is not accepted from any reviewer not belonging to the target group.

5. The editing program according to claim 1, wherein
the instructions further instruct the processor to perform processes comprising:
setting an administrator having authority to edit the editing layer, and
the editing layer is edited based on the editing instruction in a case where the administrator inputs the editing instruction.

6. The editing program according to claim 1, wherein
the instructions further instruct the processor to perform processes comprising:
storing, based on the review of the editing layer being completed, a first editing area including the editing layer and the review layer, and a second editing area including the editing layer.

7. The editing program according to claim 6, wherein
the instructions further instruct the processor to perform processes comprising:
storing the editing layer set to a state where editing is disabled and the review layer set to a state where editing is disabled for the first editing area;
storing the editing layer set to a state where editing is enabled and the review layer set to a state where editing is disabled for the second editing area; and
not performing editing based on the editing instruction to the first editing area.

8. The editing program according to claim 6, wherein
the second editing area includes the review layer, and
editing based on the editing instruction to the editing layer of the second editing area is performed, but editing based on the editing instruction to the review layer of the second editing area is not performed.

9. The editing program according to claim 1, wherein:
the instructions further instruct the processor to perform processes comprising:
acquiring approval information indicating whether editing content of the editing layer is approved by the reviewer; and
displaying, on the display, the reviewer who approves the editing content of the editing layer and the reviewer who does not approve the editing content of the editing layer in a distinguishable manner.

10. An editing method executed by an editing system including a computer and a server, the computer including a display and a processor, and the server being configured to connect to the computer, the editing method comprising:
editing, based on an editing instruction instructing to edit an editing area, an editing layer set in the editing area, and displaying the editing area that is edited on the display;
executing a restriction on the editing of the editing layer, the restriction being based on acquisition of a review instruction instructing to review the editing layer, and editing, based on the editing instruction, a review layer, and displaying the editing area that is edited on the display, the review layer being set in the editing area and being different from the editing layer; and
lifting the restriction on the editing of the editing layer based on completion of the review of the editing layer.

11. The editing method according to claim 10, wherein
the server sends the review instruction to a reviewer, and
the computer restricts the editing of the editing layer, based on receiving the review instruction, and edits the review layer set in the editing area based on the editing instruction.

12. The editing method according to claim 10, wherein
the review instruction includes a review deadline, and
the review of the editing layer is terminated in a case where the review deadline is reached.

13. The editing method according to claim 11, wherein
the review instruction includes a sending time for sending a reminder to the reviewer, and
the reminder is sent to the reviewer in a case where the sending time is reached.

14. The editing method according to claim 11, further comprising:
acquiring approval information indicating whether editing content of the editing layer is approved by the reviewer;
displaying, on the display, the reviewer who approves the editing content of the editing layer and the reviewer who does not approve the editing content of the editing layer in a distinguishable manner; and
terminating the review based on the approval information of all of the reviewers or required reviewers being stored.
